(19)

**Europäisches Patentamt**
**European Patent Office**
**Office européen des brevets**

(11) **EP 4 477 451 A1**

(12) **EUROPEAN PATENT APPLICATION**

(43) Date of publication:
**18.12.2024 Bulletin 2024/51**

(21) Application number: **24180687.6**

(22) Date of filing: **07.06.2024**

(51) International Patent Classification (IPC):
**B60L 7/10** *(2006.01)* **B60L 15/20** *(2006.01)*
**B60W 30/18** *(2012.01)*

(52) Cooperative Patent Classification (CPC):
**B60L 7/10; B60L 15/2009; B60W 30/18127;**
B60L 2200/12; B60L 2240/00; B60L 2240/12;
B60L 2240/423; B60L 2250/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.06.2023 JP 2023095057**

(71) Applicant: **Kawasaki Motors, Ltd.**
**Akashi, Hyogo 673-8666 (JP)**

(72) Inventors:
• **FUKUOKA, Rui**
**Akashi-shi, Hyogo, 673-8666 (JP)**
• **KONDO, Yoshitaka**
**Akashi-shi, Hyogo, 673-8666 (JP)**

(74) Representative: **Hoefer & Partner Patentanwälte mbB**
**Pilgersheimer Straße 20**
**81543 München (DE)**

(54) **REGENERATION CONTROL METHOD AND STRADDLE-TYPE VEHICLE**

(57) There are provided a regeneration control method for a vehicle and a straddle-type vehicle which is an example of the vehicle. The regeneration control method is executed in a processing circuitry of the vehicle including an electric motor as a drive source, and the regeneration control method includes: determining whether a start condition of regeneration control for requesting the electric motor to generate a regenerative torque is satisfied; acquiring a degree of decrease in an accelerator operation amount with lapse of time before start of the regeneration control; and determining a required regenerative torque, which is the regenerative torque required for the electric motor, based on the degree of decrease in the accelerator operation amount.

*FIG. 1*

EP 4 477 451 A1

**Description**

TECHNICAL FIELD

The present disclosure relates to a regeneration control method and a straddle-type vehicle.

BACKGROUND ART

JPH05-64304A describes a regenerative braking device for an electric vehicle.
The regenerative braking device for the electric vehicle determines a deceleration state from a motor rotation speed and an accelerator signal and performs regenerative braking according to the deceleration state.

SUMMARY OF INVENTION

There is a demand for bringing a braking feeling felt by a user when regeneration control is performed in an electric vehicle close to a feeling intended by the user.
An aspect of the present disclosure provides a regeneration control method and a straddle-type vehicle capable of bringing a braking feeling felt by a user when the regeneration control is performed close to a feeling intended by the user.
According to an illustrative aspect of the present disclosure, a regeneration control method for a vehicle, which is executed in a processing circuitry of the vehicle including an electric motor as a drive source, includes: determining whether a start condition of regeneration control for requesting the electric motor to generate a regenerative torque is satisfied; acquiring a degree of decrease in an accelerator operation amount with lapse of time before start of the regeneration control; and determining a required regenerative torque, which is the regenerative torque required for the electric motor, based on the degree of decrease in the accelerator operation amount.
According to another illustrative aspect of the present disclosure, a regeneration control method for a vehicle, which is executed in a processing circuitry of a vehicle including an electric motor as a drive source, includes: determining whether a start condition of regeneration control for requesting the electric motor to generate a regenerative torque is satisfied; and determining a required regenerative torque, which is the regenerative torque required for the electric motor, after being determined that the start condition is satisfied. An absolute value of the required regenerative torque determined during a predetermined period from start of the regeneration control is larger than an absolute value of the required regenerative torque determined after the predetermined period has elapsed.
According to another illustrative aspect of the present disclosure, a straddle-type vehicle includes: an accelerator operator operated by a user; a driving wheel; an electric motor serving as a drive source for driving the driving wheel; and a processing circuitry configured to control a regenerative torque of the electric motor for braking the driving wheel. The processing circuitry is configured to: determine whether a start condition of regeneration control for requesting the electric motor to generate the regenerative torque is satisfied; acquire a degree of decrease in an accelerator operation amount with lapse of time before start of the regeneration control; and determine a required regenerative torque, which is the regenerative torque required for the electric motor, based on the degree of decrease in the accelerator operation amount.
According to the present disclosure, the braking feeling felt by the user when the regeneration control is performed can be brought close to the feeling intended by the user.

BRIEF DESCRIPTION OF DRAWINGS

FIG. 1 is a schematic view of a vehicle according to an embodiment.
FIG. 2 is a block diagram illustrating an electrical configuration of the vehicle of FIG. 1.
FIG. 3 is a graph illustrating an example of a normal torque map and a strong regenerative torque map.
FIG. 4 is a flowchart illustrating a flow of traveling control of the vehicle by a controller.
FIG. 5 is a flowchart illustrating a flow of regeneration control.
FIG. 6 is a graph illustrating an example of a method of calculating a degree of decrease.
FIG. 7 is a graph illustrating a temporal change of a coefficient.

DESCRIPTION OF EMBODIMENTS

Hereinafter, an embodiment will be described with reference to the drawings.

Configuration of Vehicle

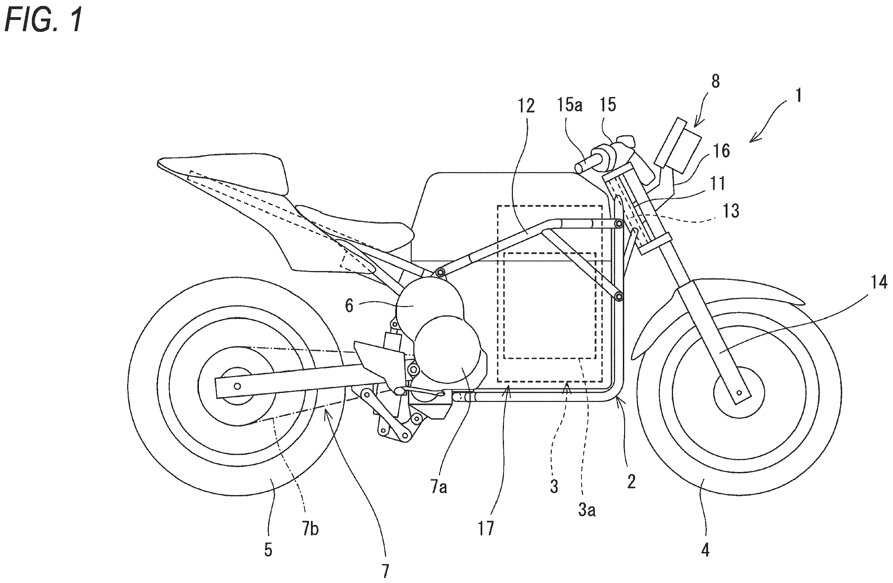

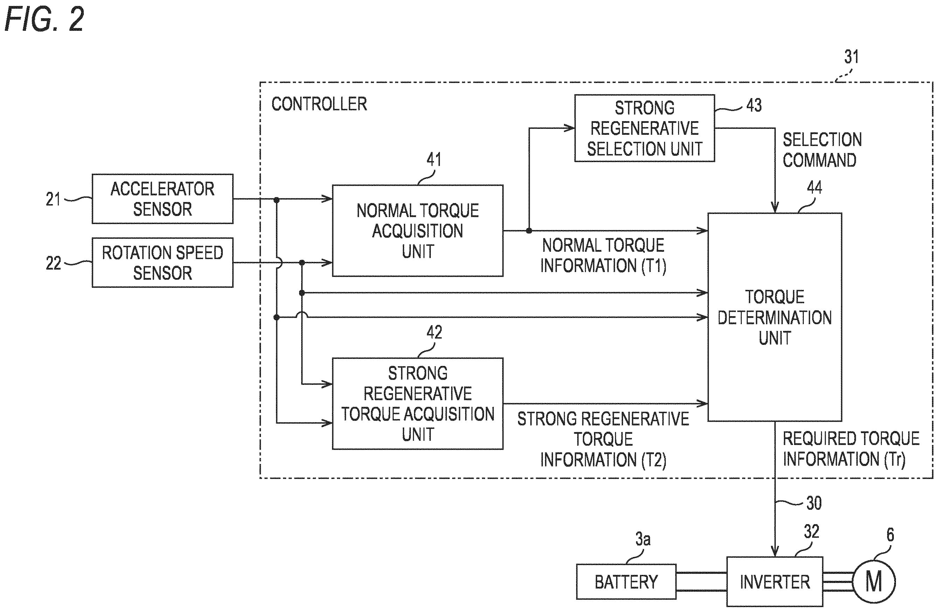

FIG. 1 is a schematic view of a vehicle 1 according to an embodiment. In the present preferred embodiment, the vehicle 1 is a straddle-type electric motorcycle. The vehicle 1 includes a vehicle body 2 and a battery pack 3. The battery pack 3 is attachable to and detachable from the vehicle body 2. The vehicle body 2 is supported by a front wheel 4, which is a driven wheel, and a rear wheel 5, which is a driving wheel. An electric motor 6 as a traveling drive source is supported by the vehicle body 2. The electric motor 6 generates a traveling driving force to be transmitted to the rear wheel 5 which is a driving wheel. The driving torque generated by the electric motor 6 is transmitted to the rear wheel 5 via a power transmission mechanism 7. The electric motor 6 is rotatable forward and backward. The electric motor 6 functions as the traveling drive source. A rotation speed sensor 22 (see FIG. 2) that detects a rotation speed of an output shaft of the electric motor 6 is disposed in the electric motor 6. The electric motor 6 also functions as a generator that generates electric power using power transmitted from the driving wheel during deceleration of the vehicle 1 or the like. The power transmission mechanism 7 includes a speed reducer 7a that decelerates rotation of the electric motor 6, and a mechanism 7b (for example, a chain transmission mechanism, a belt transmission mechanism, or the like) that transmits rotational power output from the speed reducer 7a to an axle of the rear wheel 5.

The vehicle body 2 includes a vehicle body frame, and the vehicle body frame includes a head pipe 11 and a pair of left and right main frames 12 that extend rearward from the head pipe 11. The head pipe 11 rotatably supports a steering shaft 13. A front fork 14 extending substantially vertically is connected to the steering shaft 13, and the front wheel 4 is rotatably supported at a lower end portion of the front fork 14. A bar-type handlebar 15 extending in a left-right direction is connected to an upper end portion of the steering shaft 13. An accelerator operator 15a for adjusting a driving torque generated by the electric motor 6 is disposed on the handlebar 15. In the present embodiment, the accelerator operator 15a is an accelerator grip that is a right grip of the handlebar 15.

When the accelerator operator 15a is rotated in a predetermined first moving direction from a reference position, an operation amount (hereinafter, referred to as an accelerator operation amount) is detected by an accelerator sensor 21 (see FIG. 2). The accelerator sensor 21 is realized by a position sensor that detects a rotation amount of the grip as an example. For example, the accelerator sensor 21 may be realized by a magnetic field detection sensor using a Hall IC. An urging force is applied to the accelerator operator 15a so that the accelerator operator 15a returns to the reference position in a state in which an operation of a user who is a driver is not applied. In the present embodiment, the predetermined first moving direction is set to a direction opposite to a clockwise direction when viewed from a right side of the vehicle body. With respect to the reference position, output of the electric motor 6 increases as a movement amount in the first moving direction increases, in other words, as an acceleration operation amount increases.

A meter device 8 is disposed on a front side of the handlebar 15. The meter device 8 displays a traveling speed, a motor rotation speed, a battery remaining amount, and the like. The meter device 8 is supported by the head pipe 11 via a bracket 16.

The battery pack 3 is accommodated in a battery case 17. The battery case 17 is disposed between the pair of main frames 12 in the left-right direction, and is fixed to the pair of main frames 12. The battery pack 3 includes a chargeable and dischargeable battery 3a and a battery management unit. The battery 3a, the battery management unit, and the like of the battery pack 3 accommodated in the battery case 17 are electrically connected to an electronic device on the vehicle body 2 side.

Electrical Configuration

FIG. 2 is a block diagram illustrating an electrical configuration of the vehicle 1 of FIG. 1. A controller 31 and an inverter 32 are fixed to the vehicle body 2 of the vehicle 1. The controller 31 includes a processor, a memory, an I/O interface, and the like in terms of hardware. The memory includes, for example, a storage such as a hard disk or a flash memory, and a main memory that is a RAM. The storage stores a program for issuing a control command to the electric motor 6. The processor, the memory, and the like included in the controller 31 are an example of a processing circuitry.

The controller 31 receives the accelerator operation amount detected by the accelerator sensor 21. In this specification, the accelerator operation amount may also be referred to as an accelerator opening degree. The controller 31 receives the motor rotation speed detected by the rotation speed sensor 22. The controller 31 and the inverter 32 are communicably connected to a controller area network (CAN) 30. The battery 3a is connected to the electric motor 6 via the inverter 32.

When the vehicle 1 travels, the controller 31 performs power running control or regeneration control based on the received accelerator operation amount and motor rotation speed. In the power running control, the electric motor 6 is required to generate a driving torque for causing the vehicle 1 to travel. More specifically, in the power running control, the controller 31 generates a control command for causing the electric motor 6 to generate the driving torque that is a torque in a predetermined positive direction, and outputs the control command to the inverter 32. The positive direction of the electric motor 6 is a rotation direction of the electric motor 6 that generates a driving torque for accelerating the vehicle 1 forward. The inverter 32 is controlled by the controller 31 to convert DC power discharged from the battery 3 a into AC power and supply the AC power to the electric motor 6.

In the regeneration control, the controller 31 requests the electric motor 6 to generate a regenerative torque. More specifically, in the regeneration control, the controller 31 generates a regeneration control command and outputs the regeneration control command to the inverter 32. Upon receiving the regeneration control command, the inverter causes the electric motor 6 to generate the regenerative torque that is a torque in a negative direction opposite to the positive direction in order to brake the vehicle 1. The inverter 32 converts the AC power generated by the electric motor 6 as a generator into the DC power and supplies the DC power to the battery 3a to charge the battery 3a.

The controller 31 includes a normal torque acquisition unit 41, a strong regenerative torque acquisition unit 42, a strong regenerative selection unit 43, and a torque determination unit 44 in terms of functions. The normal torque acquisition unit 41, the strong regenerative torque acquisition unit 42, the strong regenerative selection unit 43, and the torque determination unit 44 are realized by the processor performing arithmetic processing on the program read from the storage to the main memory. The normal torque acquisition unit 41, the strong regenerative torque acquisition unit 42, the strong regenerative selection unit 43, and the torque determination unit 44 perform traveling control of the vehicle 1 for switching between the power running control and the regeneration control.

The normal torque acquisition unit 41 acquires the torque corresponding to the accelerator operation amount and the motor rotation speed using a normal torque map. The strong regenerative torque acquisition unit 42 acquires the torque corresponding to the accelerator operation amount and the motor rotation speed using a strong regenerative torque map. The torque acquired by the normal torque acquisition unit 41 using the normal torque map is referred to as a normal torque T1. In addition, the torque acquired by the strong regenerative torque acquisition unit 42 using the strong regenerative torque map is referred to as a strong regenerative torque T2. The memory of the controller 31 stores the normal torque map and the strong regenerative torque map. Both the normal torque map and the strong regenerative torque map illustrate a correspondence relationship between the accelerator operation amount and the motor rotation speed, and the torque.

The normal torque map may be referred to as a first torque map. The strong regenerative torque map may be referred to as a second torque map. The strong regenerative torque map is set so that the regenerative torque becomes larger than the regenerative torque obtained by the normal torque map even under the same conditions of the motor rotation speed and the accelerator operation amount. Details of the map will be described later. The normal torque acquisition unit 41 and the strong regenerative torque acquisition unit 42 output torque information acquired from the respective maps to the torque determination unit 44.

The normal torque acquisition unit 41 outputs the acquired torque information to the strong regenerative selection unit 43. The strong regenerative selection unit 43 outputs a selection command as to whether to select the strong regenerative torque based on the torque information provided from the normal torque acquisition unit 41. In the present embodiment, the strong regenerative selection unit 43 issues, to the torque determination unit 44, a selection command to select a required torque based on the regenerative torque information from the strong regenerative torque acquisition unit 43 for a predetermined period after the torque information given from the normal torque acquisition unit 41 is switched to the regenerative torque. In other words, the strong regenerative selection unit 43 outputs a selection command indicating whether to use the strong regenerative torque information output from the strong regenerative torque acquisition unit 43 based on a predetermined selection condition.

The torque determination unit 44 determines a required torque Tr required for the electric motor 6. During the power running control, the required torque Tr is a positive value, and during the regeneration control, the required torque Tr is a negative value. In the following description, the required torque Tr during the power running control is also referred to as a required driving torque Tr, and the required torque Tr during the regeneration control is also referred to as a required regenerative torque Tr. Specifically, the torque determination unit 44 outputs the required torque Tr to the inverter 30 based on the torque information supplied from the normal torque acquisition unit 41 and the strong regenerative torque acquisition unit 42 and the selection command supplied from the strong regenerative selection unit 43. More specifically, the torque determination unit 44 determines the regenerative torque to be different based on a temporal change (a degree of decrease to be described later) of the accelerator operation amount before start of regeneration.

The torque determination unit 44 determines the required driving torque Tr using the normal torque T1 acquired by the normal torque acquisition unit 41. The torque determination unit 44 determines the required regenerative torque Tr using both the normal torque T1 acquired by the normal torque acquisition unit 41 and the strong regenerative torque T2 acquired by the strong regenerative torque acquisition unit 42. A method of determining the required torque Tr will be described in detail later. The torque determination unit 44 outputs a control command for causing the electric motor 6 to generate the determined required torque Tr to the inverter 32.

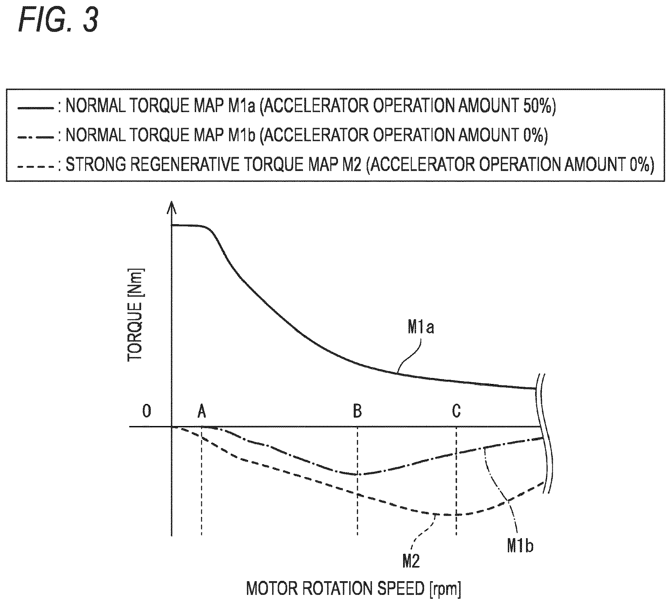

The normal torque map and the strong regenerative torque map will be described with reference to FIG. 3. FIG. 3 illustrates two normal torque maps M1a and M1b and one strong regenerative torque map M2. Each torque map illustrated in FIG. 3 is a graph illustrating the correspondence relationship between the motor rotation speed and the torque for each accelerator operation amount, and a horizontal axis indicates the motor rotation speed and a vertical axis indicates the torque.

The normal torque map M1a indicated by a solid line in FIG. 3 illustrates a correspondence relationship between the motor rotation speed and the normal torque T1 when the accelerator operation amount is 50%. The normal torque map M1b indicated by a one-dot chain line in FIG. 3 illustrates a correspondence relationship between the motor rotation speed and the normal torque T1 when the accelerator operation amount is 0%. The strong regenerative torque map M2 indicated by a broken line in FIG. 3 illustrates a correspondence relationship between the motor rotation speed and the strong regenerative torque T2 when the accelerator operation amount is 0%. In each torque map, a positive torque indicates a driving torque for driving the driving wheel, and a negative torque indicates a regenerative torque for braking the driving wheel. The normal torque T1 having a negative value may also be referred to as a normal regenerative torque T1.

The normal torque map is set such that the torque in the positive direction increases as the accelerator operation amount increases. For example, FIG. 3 illustrates the normal torque map M1a in which the accelerator operation amount is 50%, but the normal torque map in which the accelerator operation amount is larger than 50% is positioned in a region above the graph M1a in FIG. 3, and the normal torque map in which the accelerator operation amount is less than 50% is positioned in a region below the graph M1a in FIG. 3.

In the normal torque map, the positive torque (driving torque) is set to be smaller as the motor rotation speed increases even with the same accelerator operation amount (see the normal torque map M1a in FIG. 3). The normal torque map is set such that a regenerative torque is generated when the motor rotation speed is equal to or higher than a predetermined slow speed A in a case where the accelerator operation amount is zero. In the normal torque map, in the case where the accelerator operation amount is zero, the regeneration amount is set to be different according to the motor rotation speed. For example, the motor rotation speed is set such that the regeneration amount becomes maximum at a predetermined regeneration amount maximum speed B, and the regeneration amount becomes smaller as the motor rotation speed deviates from the maximum speed B (see the normal torque map M1b in FIG. 3).

In the normal torque map, the torque is interpolated based on data for each of adjacent torque rotation speeds. Although the two normal torque maps M1a and M1b are illustrated in FIG. 3, in practice, a plurality of normal torque maps respectively corresponding to values of a plurality of accelerator operation amounts (for example, a plurality of accelerator operation amounts are 0%, 10%, 20%, ..., 100%) are stored in advance in the memory. For example, when the accelerator operation amount is 2%, the linear interpolation is performed on the torque obtained from the normal torque map in which the accelerator operation amount is 0% and the torque obtained from the normal torque map in which the accelerator operation amount is 10%, so that the torque in which the accelerator operation amount is 2% is obtained. According to the normal torque map according to the present embodiment, even when the accelerator operation amount is a value exceeding zero, if the accelerator operation amount is a very small value such as 5% or less, for example, the torque corresponding to the motor rotation speed near the regeneration amount maximum speed is set to a negative value, that is, the regenerative torque. In this way, even in the normal torque map other than when the accelerator operation amount is 0%, the normal torque T1 can take a negative value in the entire region or a partial region of the motor rotation speed.

In the strong regenerative torque map, when the accelerator operation amount is zero, the regenerative torque is set to be larger than that in the normal torque map if the conditions of the motor rotation speed are the same. For example, as can be seen from comparison between the normal torque map M1b and the strong regenerative torque map M2 in which the accelerator operation amount is 0%, when the normal regenerative torque T1 and the strong regenerative torque T2 corresponding to the same accelerator operation amount and the same motor rotation speed are compared, an absolute value of the strong regenerative torque T2 is less than an absolute value of the normal regenerative torque T1. That is, the strong regenerative torque map is a torque map for obtaining a regenerative braking force stronger than the normal torque map. For example, in the strong regenerative torque map, the regenerative torque may be set to be generated when the motor rotation speed exceeds zero. Further, in the strong regenerative torque map, the motor rotation speed is set such that the regeneration amount becomes maximum at a speed C that is higher than the regeneration amount maximum speed B set in the normal torque map, and the regeneration amount becomes smaller as the motor rotation speed deviates from the maximum speed C (see the strong regenerative torque map M2 in FIG. 3). Thus, the strong regenerative torque map is set to generate a regenerative torque larger than the regenerative torque of the normal torque map.

FIG. 3 illustrates the strong regenerative torque map M2 illustrating the correspondence relationship between the motor rotation speed and the strong regenerative torque T2 when the accelerator operation amount is 0%, but a plurality of strong regenerative torque maps respectively corresponding to values of a plurality of accelerator operation amount may be stored in advance in the memory. However, since the strong regenerative torque map is a map used when the regeneration control is performed, only a map corresponding to an accelerator operation amount at which the regeneration control can be performed is prepared. For example, when the normal torque map in which the accelerator operation amount is 5% or less includes a torque of a negative value, a plurality of strong regenerative torque maps in which the accelerator operation amount is 5% or less may be prepared. For example, a torque map in which the torque is zero at any motor rotation speed may be prepared as a strong regenerative torque map in which the accelerator operation amount is a predetermined minute positive value. In this case, the torque corresponding to the accelerator operation amount between 0% and the minute value may be obtained by linear interpolation with respect to the torque obtained from the strong regenerative torque map in which the accelerator operation amount is 0% and the torque obtained from the normal torque map in which the accelerator operation amount is the minute value.

Traveling Control

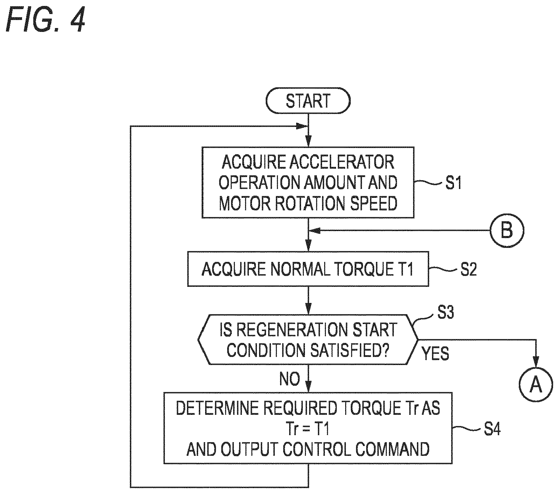

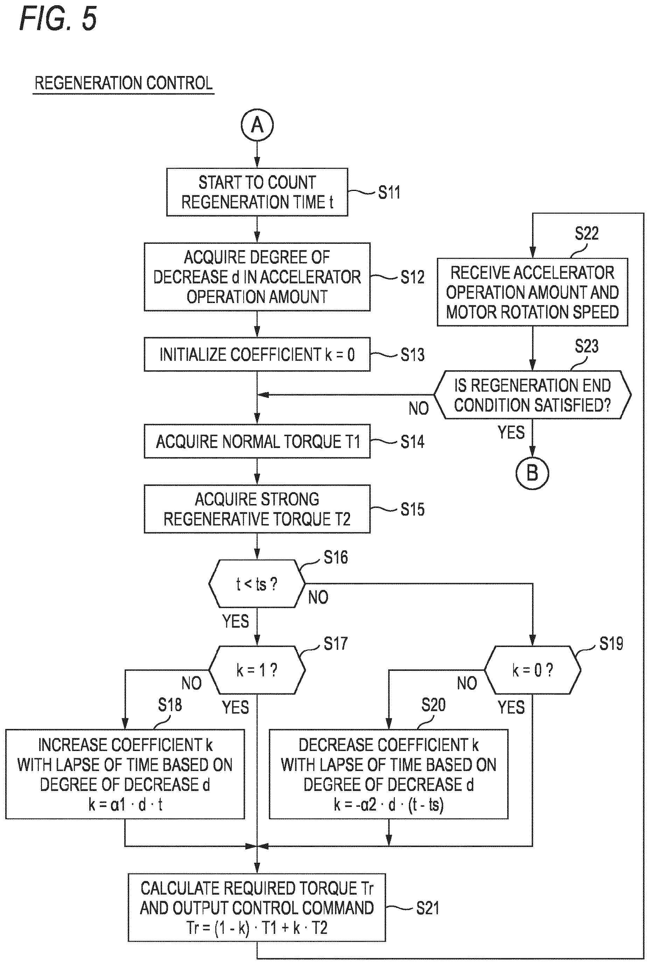

Next, the traveling control of the vehicle 1 by the controller 31 will be described with reference to FIGS. 4 and 5. The traveling control of the vehicle 1 by the controller 31 is performed by the controller 31 reading and executing a program stored in the memory of the controller 31. The controller 31 switches between the power running control and the regeneration control of the electric motor 6 according to the acquired accelerator operation amount and motor rotation speed.

Specifically, in the traveling control, the controller 31 receives the accelerator operation amount from the accelerator sensor 21 and receives the motor rotation speed from the rotation speed sensor 22 (step S1).

The controller 31, more specifically, the normal torque acquisition unit 41 acquires the normal torque T1 corresponding to the accelerator operation amount and the motor rotation speed using the normal torque map (step S2).

The controller 31, more specifically, the strong regenerative selection unit 43 determines whether a predetermined regeneration start condition is satisfied (step S3). In the present embodiment, the regeneration start condition is set to a condition that the normal torque T1 acquired in step S2 has changed from a positive value to a negative value.

When it is determined that the regeneration start condition is not satisfied (step S3: No), the controller 31, more specifically, the torque determination unit 44 determines the required torque Tr (that is, the required driving torque Tr) to be the normal torque T1 acquired in step S2 (that is, Tr = T1), and outputs the control command to the inverter 32 (step S4). After step S4, the process returns to step S1. In this way, when it is determined in step S3 that the regeneration start condition is not satisfied, steps S1, S2, and S4 are repeated, and the power running control for generating the traveling driving force by the electric motor 6 using the electric power from the battery 3a is performed.

When it is determined that the regeneration start condition is satisfied (step S3: Yes), the controller 31 switches the traveling control from the power running control to the regeneration control illustrated in FIG. 5.

Overview of Regeneration Control

The details of a regeneration control method according to the present embodiment and the outline of the regeneration control method will be described. First, a comparison with regeneration control of an engine vehicle using an internal combustion engine as a traveling drive source will be described. For example, when a user who drives an engine vehicle performs a sudden closing operation of suddenly reducing an accelerator operation amount from a relatively large value to 0%, a strong engine brake is applied, and the user obtains a strong feeling of deceleration or a feeling of shock immediately after performing the sudden closing operation. When the user performs an operation to change the accelerator operation amount from a relatively small value to 0% or an operation to slowly decrease the accelerator operation amount from a relatively large value, a strong feeling of deceleration or a feeling of shock is not obtained. When a user who is familiar with driving of the engine vehicle drives an electric vehicle, if the braking feeling at the time of deceleration is far different from the braking feeling at the time of deceleration of the engine vehicle as described above, the user may feel uncomfortable.

When the user is performing the sudden closing operation of suddenly reducing the accelerator operation amount from a relatively large value to 0%, there is a high possibility that the user desires to decelerate the vehicle relatively suddenly. In addition, when the user performs an operation of slowly decreasing the accelerator operation amount from a relatively large value, there is a high possibility that the user does not desire sudden deceleration of the vehicle. In the electric vehicle, it is desirable to generate a braking force according to a user's intention.

For example, when the straddle-type vehicle approaches a curve in a road during traveling, the user decelerates the straddle-type vehicle and steers the straddle-type vehicle before approaching the curve. When a large braking force is applied during deceleration, a load applied to the front wheel is larger than that applied to the rear wheel. This can lead to an improvement in ease of steering of the straddle-type vehicle. Also from a viewpoint of improving the ease of steering of the straddle-type electric vehicle, it is desirable to generate a strong braking force when the user performs the sudden closing operation.

In order to achieve at least one desirable feeling, in the electric vehicle 1 according to the present embodiment, an absolute value of the required regenerative torque Tr determined during the predetermined period from the start of the regeneration control is set to be larger than an absolute value of the required regenerative torque Tr determined after the predetermined period has elapsed.

More specifically, the controller 31 acquires the degree of decrease d in the accelerator operation amount with the lapse of time before the start of the regeneration control. The degree of decrease d is an index for determining the magnitude of change in the speed and the operation amount of the operation performed on the accelerator operator 15a by the user when decelerating the vehicle 1. In other words, the degree of decrease d indicates how the accelerator operation amount has decreased in a period until the start of the regeneration control. In other words, the degree of decrease d is an index for determining a degree of deceleration intended by the user. In other words, the degree of decrease d may be a temporal change per unit time of the accelerator operation for returning the accelerator operator 15a to the reference position, or a temporal change per unit time of the deceleration operation.

The controller 31 determines the required regenerative torque Tr based on the degree of decrease d in the accelerator operation amount. Specifically, when the degree of decrease d is large, the required regenerative torque Tr is increased compared to when the degree of decrease d is small. In the present embodiment, the controller 31 increases the required regenerative torque Tr with the lapse of time in accordance with the degree of decrease d in the accelerator operation amount. As the degree of decrease d increases, the required regenerative torque Tr that increases per unit time is increased. When the required regenerative torque Tr reaches a predetermined upper limit value, the required regenerative torque Tr is maintained at the upper limit value. In the present embodiment, the predetermined upper limit value corresponds to the strong regenerative torque T2 obtained with reference to the strong regenerative torque map M2 as described later. That is, in the present embodiment, the upper limit value may change with a change in the accelerator operation amount and the rotation speed of the electric motor 6 (see also the graph of the broken line in FIG. 3).

The controller 31 determines whether a predetermined regeneration reduction condition is satisfied while the required regenerative torque Tr is maintained at the upper limit value or while the required regenerative torque Tr is increased based on the degree of decrease d in the accelerator operation amount. In the present embodiment, the regeneration reduction condition corresponds to a condition that a regeneration time t to be described later reaches a set time ts.

When the controller 31 determines that the regeneration reduction condition is satisfied, the controller 31 decreases the required regenerative torque Tr with the lapse of time. When the required regenerative torque Tr reaches a predetermined lower limit value, the controller 31 maintains the required regenerative torque Tr at the lower limit value. In the present embodiment, the predetermined lower limit value corresponds to the normal regenerative torque T1 obtained with reference to the normal torque map M1b as described later. That is, in the present embodiment, the lower limit value may change with a change in the accelerator operation amount and the rotation speed of the electric motor 6 (see the graph of the one-dot chain line in FIG. 3).

Details of Regeneration Control

FIG. 5 is a flowchart illustrating a flow of the regeneration control. First, the controller 31 counts the elapsed time from a start time point of the regeneration control, that is, an elapsed time t from a time point when the regeneration start condition is satisfied (step S11). In the following description, the elapsed time t from the time point when the regeneration start condition is satisfied is referred to as the regeneration time t.

The controller 31, more specifically, the torque determination unit 44 calculates the degree of decrease d in the accelerator operation amount with the lapse of time before the start of the regeneration control, that is, before the time point when the regeneration start condition is satisfied (step S 12). The degree of decrease d in the accelerator operation amount is used to determine the required regenerative torque Tr during the predetermined period from the start of the regeneration control. The predetermined period is a period from the start of the regeneration control to a time when a coefficient k to be described later reaches 0.

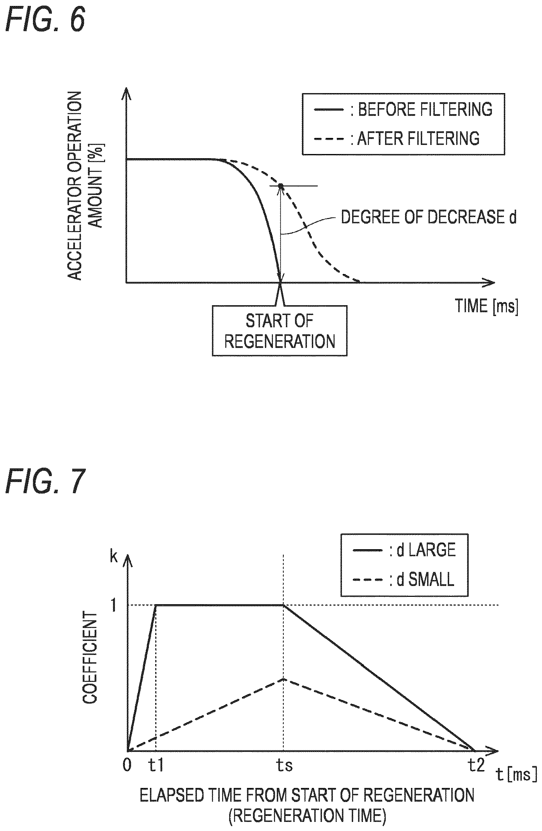

FIG. 6 is a graph illustrating an example of a method of calculating the degree of decrease d. A graph indicated by a solid line in FIG. 6 is a graph illustrating time series data of the accelerator operation amount received from the accelerator sensor 21, and a horizontal axis indicates a time axis, and a vertical axis indicates the accelerator operation amount that is the accelerator operation amount. The broken line in FIG. 6 is obtained by performing low-pass filtering on the time series data of the accelerator operation amount received from the accelerator sensor 21. The time series data of the accelerator operation amount received from the accelerator sensor 21 is referred to as "unfiltered data", and the data obtained by performing the low-pass filtering on the time series data of the accelerator operation amount received from the accelerator sensor 21 is referred to as "filtered data".

Since the filtered data is subjected to low-pass filtering, the filtered data changes later than the unfiltered data. In the present embodiment, the controller 31 sets, as the degree of decrease d, a difference in the accelerator operation amount obtained by subtracting the value of the unfiltered data at the start of the regeneration control from the value of the filtered data at the start of the regeneration control.

However, the degree of decrease d may not be the difference between the value of the filtered data and the value of the unfiltered data at the same time. For example, the degree of decrease d may be a difference of the accelerator operation amount obtained by subtracting the value of the unfiltered data at the start of the regeneration control from the value of the filtered data before a predetermined time (for example, a control cycle of the controller 31) from the start of the regeneration control.

Returning to FIG. 5, the controller 31, more specifically, the torque determination unit 44 initializes a coefficient k to 0 (step S13). The coefficient k may take a value of 0 or more and 1 or less. As will be described later, in the regeneration control according to the present embodiment, the coefficient k varies from 0 to 1 with time, and the required regenerative torque Tr required for the electric motor 6 is calculated using the coefficient k.

The controller 31, more specifically, the normal torque acquisition unit 41 acquires the normal torque T1 corresponding to the accelerator operation amount and the motor rotation speed using the normal torque map (step S14). The controller 31, more specifically, the strong regenerative torque acquisition unit 42 acquires the strong regenerative torque T2 corresponding to the accelerator operation amount and the motor rotation speed using the strong regenerative torque map (step S15).

The controller 31, more specifically, the strong regenerative selection unit 43 determines whether the regeneration time t is less than the set time ts (step S16). When it is determined that the regeneration time t is less than the set time ts (step S 16: Yes), the controller 31 determines whether the coefficient k has reached 1 (step S17). When the coefficient k has not reached 1 (step S17: No), the controller 31 increases the coefficient k at a change rate corresponding to the degree of decrease d acquired in step S12 (step S18), and proceeds to step S21.

In the memory of the controller 31, correspondence relationship information indicating a correspondence relationship between the degree of decrease d and the change rate of the coefficient k is stored in advance. The change rate of the coefficient k is an increase amount of the coefficient k per unit time. With reference to the correspondence relationship information stored in the memory, the controller 31 acquires the change rate corresponding to the acquired degree of decrease d, and increases the coefficient k at the acquired change rate. The degree of decrease d and the change rate of the coefficient k have a relationship in which the change rate (time increase rate) of the coefficient k increases as the degree of decrease d increases.

The correspondence relationship information indicating the correspondence relationship between the degree of decrease d and the change rate of the coefficient k when the regeneration time t is less than the set time ts may be information indicating a relationship in which the change rate of the coefficient k is obtained by multiplying the degree of decrease d by a predetermined positive value $\alpha1$. That is, the coefficient k may be increased by a value of $\alpha1 \times d$ per unit time. In this case, the coefficient k may be calculated by multiplying the predetermined positive value $\alpha1$, the degree of decrease d, and the regeneration time t, that is, may be calculated by the following calculation formula (1).

$$k = \alpha1 \cdot d \cdot t \ldots(1)$$

When the coefficient k has reached 1 in step S17 (step S17: Yes), the controller 31 maintains the coefficient k at 1 without changing the coefficient k, and proceeds to step S21.

When it is determined at step S16 that the regeneration time t is not less than the set time ts (step S16: No), the controller 31 determines whether the coefficient k has reached 0 (step S19). When the coefficient k has not reached 0 (step S19: No), the controller 31 decreases the coefficient k (step S20) and proceeds to step S21.

In step S20, the coefficient k may be decreased with time based on the degree of decrease d. In this case, correspondence relationship information indicating a correspondence relationship between the degree of decrease d and the change rate of the coefficient k when the regeneration time t exceeds the set time ts may also be stored in advance in the memory of the controller 31. The change rate of the coefficient k may be information indicating a relationship obtained by multiplying the degree of decrease d by a predetermined negative value ($-\alpha2$). That is, the coefficient k may be decreased by a value of $\alpha2 \times d$ per unit time. In this case, the coefficient k may be calculated by multiplying a predetermined negative value ($-\alpha2$), the degree of decrease d, and the elapsed time (t - ts) from the set time ts, that is, may be calculated by the following calculation formula (2).

$$k = -\alpha2 \cdot d \cdot (t - ts) \ldots(2)$$

When the coefficient k has reached 0 in step S19 (step S19: Yes), the controller 31 maintains the coefficient k at 0 without changing the coefficient k, and proceeds to step S21.

The controller 31, more specifically, the torque determination unit 44 calculates the required torque Tr by the following formula (3) using the coefficient k obtained through steps S16, S17, S18, S19, and S20, the normal torque T1 acquired in step S14, and the strong regenerative torque T2 acquired in step S15, and outputs the control command to the inverter 32 (step S21).

$$Tr = (1 - k) \cdot T1 + K \cdot T2 \ldots(3)$$

That is, a value obtained by adding a value obtained by multiplying the normal regenerative torque T1 by a coefficient (1 - k) to a value obtained by multiplying the strong regenerative torque T2 by a coefficient k is set as the required regenerative torque Tr. In this way, the required torque Tr is calculated using the normal torque T1 and the strong regenerative torque T2. In addition, the above formula (3) indicates that a ratio of the strong regenerative torque T2 to the required torque Tr increases as the coefficient k increases. In other words, the above formula (3) indicates that the magnitude (that is, the absolute value) of the required regenerative torque Tr increases as the coefficient k increases.

The controller 31, more specifically, the torque determination unit 44 receives the accelerator operation amount from the accelerator sensor 21 and receives the motor rotation speed from the rotation speed sensor 22 (step S22). The controller 31 determines whether a regeneration end condition is satisfied (step S23). The regeneration end condition may be set to a condition that the normal torque T1 becomes a positive value, or may be set to a condition that the accelerator operation amount exceeds a predetermined value (for example, the accelerator operation amount of 5%). The regeneration end condition may be other conditions. For example, the regeneration end condition may be a user operation such as a brake operation or a clutch operation.

When it is determined that the regeneration end condition is not satisfied (step S23: No), the process returns to step S14. Thus, when it is determined in step S23 that the regeneration end condition is not satisfied, the steps from step S14 to step S23 are repeated to cause the electric motor 6 to generate the regenerative torque corresponding to the required regenerative torque Tr.

When it is determined that the regeneration end condition is satisfied (step S23: Yes), the controller 31 switches the traveling control from the regeneration control to the power running control.

Change in Coefficient k according to Degree of Decrease d

FIG. 7 illustrates an example of a change in the coefficient k with the lapse of time. In FIG. 7, a horizontal axis indicates the regeneration time t which is the elapsed time from the time point when the regeneration start condition is satisfied, and a vertical axis indicates the coefficient k. In FIG. 7, an example of a change in the coefficient k when a relatively large degree of decrease d is acquired is indicated by a solid line, and an example of a change in the coefficient k when a relatively small degree of decrease d is acquired is indicated by a broken line.

First, a change in the coefficient k when the degree of decrease d is relatively large will be described. As illustrated in a graph of the solid line in FIG. 7, when the regeneration start condition is satisfied, the coefficient k increases at a change rate corresponding to the degree of decrease d as time elapses from the time point of the regeneration time t = 0 (see step S18 in FIG. 5). As described above, the change rate is obtained from the correspondence relationship information indicating the correspondence relationship between the degree of decrease d and the change rate of the coefficient k stored in the memory of the controller 31. In FIG. 7, the change rate corresponding to the degree of decrease d corresponds to a slope of a graph of the solid line from the time point of the regeneration time t = 0 to a time point of the regeneration time t = t1.

As illustrated in the graph of the solid line in FIG. 7, when the coefficient k reaches 1 at the time point of the regeneration time t = tl, the coefficient k is maintained at 1 until the regeneration time t reaches the set time ts (see step S17 in FIG. 5). While the coefficient k is maintained at 1, the required torque Tr becomes the strong regenerative torque T2 from the above formula (3).

As illustrated in the graph of the solid line in FIG. 7, when the regeneration time t reaches the set time ts, the coefficient k decreases at a constant change rate as time elapses (see step S20 in FIG. 5). In the present embodiment, a strong regeneration end time t2 is set in advance. The strong regeneration end time t2 is a fixed value. The coefficient k decreases at a constant change rate with time so as to reach 0 at the strong regeneration end time t2. After the coefficient k reaches 0, the required torque Tr becomes the normal regenerative torque T1.

Next, a change in the coefficient k when the degree of decrease d is relatively small will be described. Even when the degree of decrease d is relatively small, the coefficient k increases at a change rate corresponding to the degree of decrease d as time elapses from the time point of the regeneration time t = 0 as in the graph of the broken line in FIG. 7, but during a period from the time point of the regeneration time t = 0 to the time point of the regeneration time t = t1, a slope of the graph of the broken line is smaller than the slope of the graph of the solid line. This is because, in the correspondence relationship information indicating the correspondence relationship between the degree of decrease d and the change rate of the coefficient k, the change rate of the coefficient k increases as the degree of decrease d increases.

In the graph of the broken line in FIG. 7, the regeneration time t reaches the set time ts without the coefficient k reaching 1. When the regeneration time t reaches the set time ts, the coefficient k decreases at a constant change rate with the lapse of time so as to reach 0 when the regeneration time t reaches the strong regeneration end time t2. After the coefficient k reaches 0, the required torque Tr becomes the normal regenerative torque T1.

Operation and Effect

As described above, according to the present embodiment, the controller 31 acquires the degree of decrease d in the accelerator operation amount with the lapse of time before the start of the regeneration control, and determines the required regenerative torque Tr, which is the regenerative torque required for the electric motor 6, based on the degree of decrease d in the accelerator operation amount. Therefore, the regenerative torque is varied according to the accelerator operation by the user. Since the braking force corresponding to the user operation can be generated when the regeneration control is performed, the braking feeling felt by the user can be brought close to the feeling intended by the user.

In the present embodiment, the strong regenerative torque map is used at least for the predetermined period from the start of the regeneration control. For at least the predetermined period from the start of the regeneration control, the required regenerative torque Tr is determined based on the degree of decrease d in the accelerator operation amount. Therefore, the braking feeling immediately after the start of the regeneration control can be brought close to the feeling intended by the user.

In the present embodiment, as described above, the correspondence relationship information stored in the memory is set such that the time increase rate of the coefficient k increases as the degree of decrease d increases. Further, the required regenerative torque Tr is determined using the formula (3) in which the absolute value of the required regenerative torque Tr increases as the coefficient k increases. That is, the required regenerative torque Tr is increased as the degree of decrease d in the accelerator operation amount is increased. Therefore, the braking feeling felt by the user when the regeneration control is performed can be brought close to the braking feeling when the engine brake in the engine vehicle is operated. Accordingly, it is easy to prevent the user who is familiar with the driving of the engine vehicle from feeling uncomfortable.

In the present embodiment, the coefficient k is increased in step S 18 from the start of the regeneration control to a time point when the condition that the coefficient k reaches 1 is satisfied. Accordingly, since the required regenerative torque Tr is increased with the lapse of time from the start of the regeneration control to the time point when the predetermined condition is satisfied, it is possible to reduce the shock generated in a vehicle body as compared with a case where the regenerative torque is suddenly changed.

In the present embodiment, the change rate in the coefficient k increases as the degree of decrease d in the accelerator operation amount increases. Accordingly, since the increase amount per unit time of the required regenerative torque Tr is increased as the degree of decrease d in the accelerator operation amount is increased, the braking feeling can be brought close to the braking feeling when the engine brake in the engine vehicle is operated, and it is easy to prevent the user who is familiar with the driving of the engine vehicle from feeling uncomfortable.

In the present embodiment, when the coefficient k reaches 1, the coefficient k is maintained at 1. That is, the required regenerative torque Tr is maintained at the strong regenerative torque T2 as the upper limit value. Since the upper limit value of the regenerative torque is set in this way, it is possible to prevent the braking force due to the regenerative torque from becoming excessive. Since the upper limit value varies depending on the rotation speed of the electric motor 6, the regenerative torque of the electric motor 6 can be limited to a range suitable for the rotation speed.

In the present embodiment, after the regeneration time t reaches the set time ts, that is, after it is determined that the regeneration reduction condition is satisfied, the regenerative torque decreases with the lapse of time, and therefore it is possible to reduce the shock generated in the vehicle body as compared with the case where the regenerative torque is suddenly decreased.

In the present embodiment, the absolute value of the required regenerative torque Tr determined during the predetermined period from the start of the regeneration control is larger than the absolute value of the required regenerative torque Tr determined after the predetermined period has elapsed. Therefore, it is possible to apply a relatively large regenerative torque from the start of the regeneration control to the predetermined period, and to generate a braking feeling in accordance with a deceleration intention of the user.

In the present embodiment, the coefficient k (where $0 \leq k \leq 1$) is determined so as to increase with the lapse of time as the degree of decrease in the accelerator operation amount increases, and the regenerative torque is determined by adding a value obtained by multiplying the normal regenerative torque by a coefficient (1 - k) to a value obtained by multiplying the strong regenerative torque by the coefficient k. Therefore, with a simple control logic, the regenerative torque can be increased as the degree of decrease in the accelerator operation amount is increased.

Other Embodiments

The present disclosure is not limited to the embodiment described above, and the configuration can be changed, added, or deleted.

For example, the vehicle described in the above embodiment is an electric vehicle including one traveling drive source, but the vehicle is not limited thereto. For example, the vehicle may be a hybrid vehicle including two traveling drive sources of an electric motor and an internal combustion engine. That is, the regeneration control method according to the present disclosure is also applicable to the hybrid vehicle. In the hybrid vehicle, the above regeneration control may be performed during traveling by motor driving. In addition, the straddle-type vehicle may not be a two-wheeled vehicle but may be a three-wheeled vehicle. In addition, the vehicle may not be a straddle-type vehicle, and may be, for example, a four-wheel vehicle. The vehicle may include a transmission that switches a transmission gear ratio. The regeneration control method according to the present disclosure is applicable to all vehicles. Further, the regeneration control method according to the present disclosure can be suitably applied to a straddle-type vehicle which has a relatively light weight compared to the four-wheel vehicle and has a large influence on a feeling by the regeneration control.

In the above embodiment, the regeneration start condition is a condition determined using the accelerator operation amount, the motor rotation speed, and the normal torque map, but the regeneration start condition is not limited thereto. For example, the regeneration start condition may be a condition that the accelerator operation amount is zero or is equal to or less than a predetermined value (for example, an accelerator operation amount of 5%). In the above embodiment, the start condition of the regeneration control is determined based on the accelerator operation amount, but the start condition of the regeneration control may be determined based on conditions other than the accelerator operation amount. For example, the start condition of the regeneration control may include a condition that a brake operation is performed on a brake operator.

In a case where the vehicle includes a transmission that switches the transmission gear ratio according to the shift operation of the user, the start condition of the regeneration control may include a condition that the shift operation of the user is a predetermined operation. In this way, the start of the regeneration control may be determined based on the operation of the user. Further, the start condition of the regeneration control may be determined based on a plurality of user operations such as an accelerator operation amount, a brake operation amount, and a shift operation amount. Further, the regeneration start condition may be corrected or changed based on a vehicle state such as a vehicle speed, the motor rotation speed, and the transmission gear ratio. For example, the regeneration start condition may be set such that the regeneration control is started earlier as the vehicle speed or the motor rotation speed is higher. Whether the regeneration control is necessary may be determined according to the state of the battery. The regeneration start condition may be set such that the start of the regeneration control is prevented when it is determined that the battery or the circuit is damaged, for example, when a state of charge (SOC) of the battery is large or when a temperature of an electric wire is excessive.

In the above embodiment, the regeneration reduction condition is a condition that the regeneration time t reaches the set time ts, but the regeneration reduction condition is not limited thereto. For example, the regeneration reduction condition may be a condition that either a condition that the regeneration time t reaches the set time ts or a condition that the coefficient k reaches 1 is satisfied. Further, the regeneration reduction condition may be set according to the vehicle speed or the motor rotation speed.

In the above embodiment, the strong regenerative torque map is used during the strong regeneration end time t2 that is a predetermined period from the start of the regeneration control. The strong regeneration end time t2 is a preset fixed value, but the predetermined period is not limited thereto. The strong regeneration end time t2 may be a variation value. For example, the strong regeneration end time t2 may be set to increase as the degree of decrease d increases. Alternatively, the strong regeneration end time t2 may be set to increase as the magnitude of the coefficient k at the time point when the regeneration time t reaches the set time ts increases. The change rate of the coefficient k with the lapse of time after the regeneration time t reaches the set time ts may be a fixed value, and accordingly the strong regeneration end time t2 may depend on the magnitude of the coefficient k at the time point when the regeneration time t reaches the set time ts.

In the above embodiment, the two torque maps of the strong regenerative torque map and the normal torque map are used, and the coefficient k, which is the ratio of the strong regenerative torque T2 to the required torque Tr, is increased with the lapse of time as the degree of decrease d is increased, so that the required regenerative torque is increased as the degree of decrease d is increased. The method for determining the required regenerative torque that increases as the degree of decrease d increases is not limited thereto.

For example, in the above embodiment, both the strong regenerative torque map and the normal torque map are used for the predetermined period from the start of the regeneration control, but only the normal torque map may be used. In this case, the normal regenerative torque may be acquired from the normal torque map, and a value obtained by adding an additional torque corresponding to the magnitude of the degree of decrease d to the normal regenerative torque obtained from the normal torque map during the predetermined period from the start of the regeneration control may be set as the required regenerative torque. Alternatively, a value obtained by multiplying the normal regenerative torque obtained by the normal torque map by a value corresponding to the magnitude of the degree of decrease d (however, a value of 1 or more) may be set as the required regenerative torque.

For example, in the above embodiment, both the strong regenerative torque map and the normal torque map are used for the predetermined period from the start of the regeneration control, but only the strong regenerative torque map may be used, and in this case, the value obtained with reference to the strong regenerative torque map may be used as the required regenerative torque.

For example, in the above embodiment, two types of regenerative torque (that is, the normal regenerative torque and the strong regenerative torque) are acquired using two torque maps of the strong regenerative torque map and the normal torque map, but the normal regenerative torque and the strong regenerative torque may be acquired by a method other than the torque map. The normal regenerative torque and the strong regenerative torque may be calculated by the calculation formulas different from each other such as different coefficients.

In the above embodiment, the normal torque map and the strong regenerative torque map illustrate the correspondence relationship between the accelerator operation amount and the motor rotation speed, and the torque, but the normal torque map and the strong regenerative torque map are not limited thereto. In the normal torque map and the strong regenerative torque map, only one or both of the normal torque map and the strong regenerative torque map may indicate a correspondence relationship between the torque and only one of the accelerator operation amount and the motor rotation speed.

In the above embodiment, the required regenerative torque Tr is maintained so as not to exceed the predetermined upper limit value, and the upper limit value corresponds to the strong regenerative torque T2 obtained with reference to the strong regenerative torque map M2, but the upper limit value is not limited thereto. The upper limit value may not change according to the accelerator operation amount or the motor rotation speed. For example, the upper limit value may be a fixed value set in advance.

In the regeneration control according to the above embodiment, the acquisition of the degree of decrease in the accelerator operation amount with the lapse of time before the start of the regeneration control includes performing the low-pass filtering on the acquired accelerator operation amount, and calculating the degree of decrease in the accelerator operation amount by subtracting the acquired accelerator operation amount from the accelerator operation amount after low-pass filtering. However, a method of acquiring the degree of decrease is not limited thereto. In the above embodiment, as described with reference to FIG. 6, the degree of decrease d is the difference of the accelerator operation amount obtained by subtracting the value of the unfiltered data at the start of the regeneration control from the value of the filtered data at the start of the regeneration control, but the degree of decrease may be a value correlated with the temporal change rate of the accelerator operation amount, and other indices indicating the degree of decrease in the accelerator operation amount may be used.

For example, the degree of decrease in the accelerator operation amount may be calculated from a difference between the accelerator operation amount at the start of the regeneration control and the accelerator operation amount acquired a predetermined time before the start of the regeneration control. However, in this case, when the predetermined time is set to a relatively small value, only the operation of the user immediately before the regeneration control start time point is reflected in the degree of decrease in the accelerator operation amount. Therefore, for example, a difference in the calculated degree of decrease is less likely to occur between a case where an operation of suddenly closing the accelerator operation amount is performed from a state where the accelerator operation amount is fully opened (100%) and a case where an operation of suddenly closing the accelerator operation amount is performed from a state where the accelerator operation amount is 20%. On the other hand, when the predetermined time is set to a relatively large value, the operation of the user performed during the predetermined time is not reflected in the degree of decrease in the accelerator operation amount. For example, a difference in the calculated degree of decrease is less likely to occur between a case where an operation for slowly reducing the accelerator operation amount is performed from a time point before the start of the regeneration control by the predetermined time and a case where an operation for temporarily increasing the accelerator operation amount from a time point before the start of the regeneration control by the predetermined time and then reducing the accelerator operation amount is performed. For this reason, the degree of decrease in the accelerator operation amount is preferably calculated by subtracting the acquired accelerator operation amount from the accelerator operation amount after the low-pass filtering, from the viewpoint that the operation of the user is easily reflected in the degree of decrease in the acquired accelerator operation amount.

In the above embodiment, when the coefficient k is gradually changed, the coefficient k is linearly changed so as to increase by a certain amount per unit time as illustrated in FIG. 7, but the coefficient k may be changed non-linearly or may be changed stepwise. In addition, the coefficient k may be instantaneously changed instead of being gradually changed.

In the above embodiment, the required torque Tr is calculated by the formula (3), but the calculation formula of the required torque Tr is merely an example. The required torque Tr may be determined by another method. Also in this case, it is preferable to increase the regenerative torque at an initial stage of the start of the regeneration as the degree of decrease in the accelerator operation amount increases. In addition, in the present embodiment, as the degree of decrease of the accelerator operation amount increases, the increase amount of the regenerative torque (the temporal change rate of the regenerative torque) by which the regenerative torque increases with the lapse of time from the start of the regeneration is increased. For example, the larger the degree of decrease in the accelerator operation amount is, the larger the maximum value of the regenerative torque is, and the temporal change rate of the regenerative torque may be the same regardless of the degree of decrease in the accelerator operation amount. For example, the required regenerative torque may be determined to become the maximum regenerative torque at the start of regeneration, instead of gradually increasing at the start of regeneration. Also in this case, it is preferable that the maximum regenerative torque is determined to increase as the degree of decrease in the accelerator operation amount increases.

In the above embodiment, the strong regenerative torque is set based on the motor rotation speed and the accelerator operation amount, but the strong regenerative torque is not limited thereto, and the strong regenerative torque may be a value that generates a large regeneration amount with respect to the regeneration amount of the normal torque map. Since the strong regenerative torque having a value different from that of the regenerative torque obtained by the normal torque map is set based on the motor rotation speed and the accelerator operation amount, it is possible to easily obtain the regenerative torque different depending on the situation and to easily approach the braking feeling preferred by the user.

Although the battery is detachable in the above embodiment, the battery may not be detachable. The electric motor may not be disposed between the front and rear wheels. For example, the electric motor may be an in-wheel motor. The electric motor may be disposed on a swing arm that pivotally supports the rear wheel. In the above embodiment, the electric motor is exemplified by an AC motor, but may be a DC motor. The vehicle may separately include a driving motor and a braking motor. The vehicle body frame supporting the electric motor and the battery can be appropriately changed.

The meter device 8 may display information indicating a regeneration control state in which the regeneration control is performed. In this case, the controller 31 transmits a command for displaying the regeneration control state to the meter device 8. In addition, when displaying the regeneration control state, the meter device 8 may make a display mode different between a state in which the regenerative braking is strong and a state in which the regenerative braking is weak. In this case, the controller 31 transmits, to the meter device 8, information indicating whether the regenerative braking is strong or weak.

The functions of the elements disclosed in the present specification can be executed by using a general-purpose processor, a dedicated processor, an integrated circuit, application specific integrated circuits (ASICs), a conventional circuit, a circuit or a processing circuitry including any combination thereof, which is configured or programmed to execute the disclosed functions. Since the processor includes a transistor and other circuits, the processor is regarded as a processing circuitry or a circuit. In the present disclosure, the circuit, the unit, and the means are hardware for executing the listed functions or hardware programmed to execute the listed functions. The hardware may be the hardware disclosed in this specification, or may be a program or other known hardware configured to execute the listed functions. When the hardware is a processor considered as a kind of circuit, the circuit, means, or unit is a combination of hardware and software, and the software is used for the hardware or the configuration of the processor.

A program including instructions to execute the method disclosed herein may be stored in a non-transitory computer-readable storage medium. The non-transitory computer-readable storage medium includes, for example, a magnetic disk such as a hard disk drive, an optical disk such as a CD-ROM, a DVD disk, and a Blu-ray disk, a read-only memory (ROM), a random access memory (RAM), an EPROM, an EEPROM, a magnetic card, a flash memory, an optical card, and any type of medium suitable for storing an electronic command.

Disclosed Aspect

The following aspects each disclose a preferred embodiment.

According to a first aspect of the present disclosure, a regeneration control method for a vehicle, which is executed in a processing circuitry of the vehicle including an electric motor as a drive source, includes: determining whether a start condition of regeneration control for requesting the electric motor to generate a regenerative torque is satisfied; acquiring a degree of decrease in an accelerator operation amount with lapse of time before start of the regeneration control; and determining a required regenerative torque, which is the regenerative torque required for the electric motor, based on the degree of decrease in the accelerator operation amount.

According to the method, the regenerative torque is varied according to an accelerator operation by a user. Since the braking force corresponding to the user operation can be generated when the regeneration control is performed, the braking feeling felt by the user can be brought close to the feeling intended by the user.

According to a second aspect of the present disclosure, in the regeneration control method for the vehicle according to the aspect 1, determining the required regenerative torque based on the degree of decrease in the accelerator operation amount is performed for a predetermined period from the start of the regeneration control.

According to the method, since the required regenerative torque is determined based on the degree of decrease in the accelerator operation amount during at least the predetermined period from the start of the regeneration control, the braking feeling immediately after the start of the regeneration control can be brought close to the feeling intended by the user.

According to a third aspect of the present disclosure, in the regeneration control method for the vehicle according to the aspect 1 or 2, determining the required regenerative torque based on the degree of decrease in the accelerator operation amount includes increasing the required regenerative torque as the degree of decrease in the accelerator operation amount increases.

According to the method, since the regenerative torque increases as the degree of decrease in the accelerator operation amount increases, the braking feeling felt by the user when the regeneration control is executed can be brought close to the braking feeling when an engine brake in an engine vehicle is operated. Accordingly, it is easy to prevent the user who is familiar with the driving of the engine vehicle from feeling uncomfortable.

According to a fourth aspect of the present disclosure, in the regeneration control method for the vehicle according to any one of the aspects 1 to 3, determining the required regenerative torque based on the degree of decrease in the accelerator operation amount includes increasing the required regenerative torque with the lapse of time from the start of the regeneration control to a time point when a predetermined condition is satisfied.

According to the method, since the regenerative torque generated by the electric motor increases with the lapse of time, it is possible to reduce shock generated in a vehicle body as compared with a case where the regenerative torque is suddenly changed.

According to a fifth aspect of the present disclosure, in the regeneration control method for the vehicle according to the aspect 4, increasing the required regenerative torque includes increasing an increase amount per unit time in the required regenerative torque as the degree of decrease in the accelerator operation amount increases.

According to the method, since the increase amount per unit time of the required regenerative torque is increased as the degree of decrease in the accelerator operation amount is increased, the braking feeling can be brought close to the braking feeling when the engine brake in the engine vehicle is operated, and it is easy to prevent the user who is familiar with the driving of the engine vehicle from feeling uncomfortable.

According to a sixth aspect of the present disclosure, in the regeneration control method for the vehicle according to any one of the aspects 1 to 5, determining the required regenerative torque based on the degree of decrease in the accelerator operation amount includes: increasing the required regenerative torque with the lapse of time based on the degree of decrease in the accelerator operation amount; maintaining the required regenerative torque at a predetermined upper limit value when the required regenerative torque reaches the upper limit value; determining whether a predetermined regeneration reduction condition is satisfied; and decreasing the required regenerative torque when being determined that the regeneration reduction condition is satisfied.

According to the method, since the upper limit value of the regenerative torque is set, it is possible to prevent the braking force due to the regenerative torque from becoming excessive.

According to a seventh aspect of the present disclosure, in the regeneration control method for the vehicle according to the aspect 6, the upper limit value changes in accordance with a rotation speed of the electric motor.

According to the method, since the upper limit value of the regenerative torque is changed according to the motor rotation speed, the regenerative torque of the electric motor can be limited to a range suitable for the rotation speed.

According to an eighth aspect of the present disclosure, in the regeneration control method for the vehicle according to any one of the aspects 1 to 3, determining the required regenerative torque based on the degree of decrease in the accelerator operation amount includes: changing the required regenerative torque with the lapse of time based on the degree of decrease in the accelerator operation amount; determining whether a predetermined regeneration reduction condition is satisfied; and reducing the regenerative torque with the lapse of time when being determined that the regeneration reduction condition is satisfied, after or while changing the required regenerative torque based on the degree of decrease in the accelerator operation amount.

According to the method, since the regenerative torque decreases with the lapse of time after it is determined that the regeneration reduction condition is satisfied, it is possible to reduce the shock generated in the vehicle body as compared with the case where the regenerative torque is suddenly decreased.

According to a ninth aspect of the present disclosure, a regeneration control method for a vehicle, which is executed in a processing circuitry of a vehicle including an electric motor as a drive source, includes: determining whether a start condition of regeneration control for requesting the electric motor to generate a regenerative torque is satisfied; and determining a required regenerative torque, which is the regenerative torque required for the electric motor, after being determined that the start condition is satisfied. An absolute value of the required regenerative torque determined during a predetermined period from start of the regeneration control is larger than an absolute value of the required regenerative torque determined after the predetermined period has elapsed.

According to the method, it is possible to apply a relatively large regenerative torque from the start of the regeneration control to a predetermined period, and to generate a braking feeling in accordance with a deceleration intention of the user.

According to a tenth aspect of the present disclosure, a straddle-type vehicle includes: an accelerator operator operated by a user; a driving wheel; an electric motor serving as a drive source for driving the driving wheel; and a processing circuitry configured to control a regenerative torque of the electric motor for braking the driving wheel. The processing circuitry is configured to: determine whether a start condition of regeneration control for requesting the electric motor to generate the regenerative torque is satisfied; acquire a degree of decrease in an accelerator operation amount with lapse of time before start of the regeneration control; and determine a required regenerative torque, which is the regenerative torque required for the electric motor, based on the degree of decrease in the accelerator operation amount.

**Claims**

1. A regeneration control method for a vehicle (1), the regeneration control method being executed in a processing circuitry (31) of the vehicle (1) including an electric motor (6) as a drive source, the regeneration control method comprising:

   determining whether a start condition of regeneration control for requesting the electric motor (6) to generate a regenerative torque is satisfied; acquiring a degree of decrease (d) in an accelerator operation amount with lapse of time before start of the regeneration control; and determining a required regenerative torque (Tr), which is the regenerative torque required for the electric motor (6), based on the degree of decrease (d) in the accelerator operation amount.

2. The regeneration control method for the vehicle (1) according to claim 1, wherein
determining the required regenerative torque (Tr) based on the degree of decrease (d) in the accelerator operation amount is performed for a predetermined period from the start of the regeneration control.

3. The regeneration control method for the vehicle (1) according to claim 1 or 2, wherein
determining the required regenerative torque (Tr) based on the degree of decrease (d) in the accelerator operation amount includes increasing the required regenerative torque (Tr) as the degree of decrease (d) in the accelerator operation amount increases.

4. The regeneration control method for the vehicle (1) according to any one of claims 1 to 3, wherein
determining the required regenerative torque (Tr) based on the degree of decrease (d) in the accelerator operation amount includes increasing the required regenerative torque (Tr) with the lapse of time from the start of the regeneration control to a time point when a predetermined condition is satisfied.

5. The regeneration control method for the vehicle (1) according to claim 4, wherein
increasing the required regenerative torque (Tr) includes increasing an increase amount per unit time in the required regenerative torque (Tr) as the degree of decrease (d) in the accelerator operation amount increases.

6. The regeneration control method for the vehicle (1) according to any one of claims 1 to 5, wherein
determining the required regenerative torque (Tr) based on the degree of decrease (d) in the accelerator operation amount includes:

changing the required regenerative torque (Tr) with the lapse of time based on the degree of decrease (d) in the accelerator operation amount;
maintaining the required regenerative torque (Tr) at a predetermined upper limit value when the required regenerative torque (Tr) reaches the upper limit value;
determining whether a predetermined regeneration reduction condition is satisfied; and
decreasing the required regenerative torque (Tr) when being determined that the regeneration reduction condition is satisfied.

7. The regeneration control method for the vehicle (1) according to claim 6, wherein
the upper limit value changes in accordance with a rotation speed of the electric motor (6).

8. The regeneration control method for the vehicle (1) according to any one of claims 1 to 3, wherein
determining the required regenerative torque (Tr) based on the degree of decrease (d) in the accelerator operation amount includes:

changing the required regenerative torque (Tr) with the lapse of time based on the degree of decrease (d) in the accelerator operation amount;
determining whether a predetermined regeneration reduction condition is satisfied; and
reducing the regenerative torque with the lapse of time when being determined that the regeneration reduction condition is satisfied, after or while changing the required regenerative torque (Tr) based on the degree of decrease (d) in the accelerator operation amount.

9. A regeneration control method for a vehicle (1), the regeneration control method being executed in a processing circuitry (31) of a vehicle including an electric motor (6) as a drive source, the regeneration control method comprising:

determining whether a start condition of regeneration control for requesting the electric motor (6) to generate a regenerative torque is satisfied; and
determining a required regenerative torque (Tr), which is the regenerative torque required for the electric motor (6), after being determined that the start condition is satisfied, wherein
an absolute value of the required regenerative torque (Tr) determined during a predetermined period from start of the regeneration control is larger than an absolute value of the required regenerative torque (Tr) determined after the predetermined period has elapsed.

10. A program causing the processing circuitry (31) to execute the regeneration control method for the vehicle (1) according to any one of claims 1 to 9.

11. A non-transitory computer readable medium storing the program according to claim 10.

12. A straddle-type vehicle (1) comprising:

an accelerator operator (15a) operated by a user;
a driving wheel;
an electric motor (6) serving as a drive source for driving the driving wheel; and
a processing circuitry (31) configured to control a regenerative torque of the electric motor (6) for braking the driving wheel (5), wherein the processing circuitry (31) is configured to:

determine whether a start condition of regeneration control for requesting the electric motor (6) to generate the regenerative torque is satisfied;
acquire a degree of decrease (d) in an accelerator operation amount with lapse of time before start of the regeneration control; and
determine a required regenerative torque (Tr), which is the regenerative torque required for the electric motor (6), based on the degree of decrease (d) in the accelerator operation amount.

FIG. 1

## FIG. 2

CONTROLLER — 31

21 ACCELERATOR SENSOR

22 ROTATION SPEED SENSOR

41 NORMAL TORQUE ACQUISITION UNIT → NORMAL TORQUE INFORMATION (T1)

42 STRONG REGENERATIVE TORQUE ACQUISITION UNIT → STRONG REGENERATIVE TORQUE INFORMATION (T2)

43 STRONG REGENERATIVE SELECTION UNIT → SELECTION COMMAND

44 TORQUE DETERMINATION UNIT → REQUIRED TORQUE INFORMATION (Tr)

30

3a BATTERY — 32 INVERTER — 6 M

EP 4 477 451 A1

# FIG. 3

—— : NORMAL TORQUE MAP M1a (ACCELERATOR OPERATION AMOUNT 50%)

—·— : NORMAL TORQUE MAP M1b (ACCELERATOR OPERATION AMOUNT 0%)

---- : STRONG REGENERATIVE TORQUE MAP M2 (ACCELERATOR OPERATION AMOUNT 0%)

TORQUE [Nm]

M1a

0   A        B        C

M2        M1b

MOTOR ROTATION SPEED [rpm]

*FIG. 4*

START

ACQUIRE ACCELERATOR
OPERATION AMOUNT AND ──S1
MOTOR ROTATION SPEED

B

ACQUIRE NORMAL TORQUE T1 ──S2

IS REGENERATION START ──S3
CONDITION SATISFIED? YES

A

NO

DETERMINE REQUIRED TORQUE Tr AS
Tr = T1 ──S4
AND OUTPUT CONTROL COMMAND

## FIG. 5

REGENERATION CONTROL

START TO COUNT
REGENERATION TIME t — S11

ACQUIRE DEGREE OF
DECREASE d IN ACCELERATOR
OPERATION AMOUNT — S12

INITIALIZE COEFFICIENT k = 0 — S13

ACQUIRE NORMAL TORQUE T1 — S14

ACQUIRE STRONG
REGENERATIVE TORQUE T2 — S15

S16
t < ts ?

RECEIVE ACCELERATOR
OPERATION AMOUNT AND
MOTOR ROTATION SPEED — S22

S23
IS REGENERATION END
CONDITION SATISFIED?
NO
YES

Ⓑ

YES                          NO

S17
k = 1 ?
NO                YES

S19
k = 0 ?
NO                YES

S18
INCREASE COEFFICIENT k
WITH LAPSE OF TIME BASED ON
DEGREE OF DECREASE d
$k = \alpha1 \cdot d \cdot t$

S20
DECREASE COEFFICIENT k
WITH LAPSE OF TIME BASED ON
DEGREE OF DECREASE d
$k = -\alpha2 \cdot d \cdot (t - ts)$

CALCULATE REQUIRED TORQUE Tr
AND OUTPUT CONTROL COMMAND
$Tr = (1 - k) \cdot T1 + k \cdot T2$ — S21

21

*FIG. 6*

*FIG. 7*

Europäisches
Patentamt

European
Patent Office

Office européen
des brevets

# EUROPEAN SEARCH REPORT

Application Number

EP 24 18 0687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/019058 A1 (GEORGIEV STEPHAN P [CA]) 15 January 2015 (2015-01-15) <br> * figures 1-5 * <br> * paragraphs [0094] - [0104] * <br> - - - - - | 1-12 | INV. <br> B60L7/10 <br> B60L15/20 <br> B60W30/18 |
| X | JP 2012 205476 A (HONDA MOTOR CO LTD) 22 October 2012 (2012-10-22) <br> * figures 1-13 * <br> * paragraphs [0048] - [0061] * <br> - - - - - | 1-12 | |
| X | US 2015/258898 A1 (MATSUDA YOSHIMOTO [JP]) 17 September 2015 (2015-09-17) <br> * paragraphs [0052] - [0081]; figures 1-5 * <br> - - - - - | 1-12 | |

TECHNICAL FIELDS
SEARCHED (IPC)

B60L
B60W

The present search report has been drawn up for all claims

| Place of search | Date of completion of the search | Examiner |
|---|---|---|
| The Hague | 30 October 2024 | Gücin, Taha |

EPO FORM 1503 03.82 (P04C01)

## ANNEX TO THE EUROPEAN SEARCH REPORT
## ON EUROPEAN PATENT APPLICATION NO.

EP 24 18 0687

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | | Publication date | Patent family member(s) | | Publication date |
|---|---|---|---|---|---|
| US 2015019058 | A1 | 15-01-2015 | CA | 2856550 A1 | 12-01-2015 |
| | | | US | 2015019058 A1 | 15-01-2015 |
| JP 2012205476 | A | 22-10-2012 | JP | 6194152 B2 | 06-09-2017 |
| | | | JP | 2012205476 A | 22-10-2012 |
| US 2015258898 | A1 | 17-09-2015 | CN | 104718100 A | 17-06-2015 |
| | | | EP | 2910402 A1 | 26-08-2015 |
| | | | JP | 6034874 B2 | 30-11-2016 |
| | | | JP | WO2014064728 A1 | 05-09-2016 |
| | | | US | 2015258898 A1 | 17-09-2015 |
| | | | WO | 2014064728 A1 | 01-05-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0564304 A